# EUROPEAN PATENT APPLICATION

(11) **EP 4 560 290 A1**
(43) Date of publication of application: **28.05.2025**
(21) Application number: 23842810.6
(22) Date of filing: 03.07.2023
(51) Int. Cl.: G01N 15/02, B01D 21/01, B01D 21/30, C02F 1/52, C02F 1/56, G01N 21/49

(54) **METHOD FOR DETERMINING STATE OF AGGREGATION AND METHOD FOR PROCESSING AGGREGATION**

(30) Priority: 22.07.2022 JP 2022116997
(71) Applicant: Kurita Water Industries Ltd., Tokyo 164-0001 (JP)
(72) Inventor: INOUE Ken, Tokyo 164-0001 (JP); SUZUKI Mizuki, Tokyo 164-0001 (JP); NAGAO Nobuaki, Tokyo 164-0001 (JP)
(74) Representative: Carpmaels & Ransford LLP
(86) International application number: PCT/JP2023/024639
(87) International publication number: WO 2024/018885

(57) **Abstract**

This method for determining a flocculation state is for irradiating a liquid containing particles with laser light and determining a flocculation state of the particles on the basis of a change width of received light intensity of scattered light resulting from scattering of the laser light due to the particles, and includes: a correlation acquisition step of obtaining a correlation between the particle size of the particles and the change width of received light intensity; and a determination step of determining a flocculation state of the particles on the basis of the correlation.

## Description

### Technical Field

The present invention relates to a method for determining a flocculation state and a method of flocculation treatment. This application claims priority based on Japanese Patent Application No. 2022-116997 filed in Japan on July 22, 2022, the contents of which are incorporated herein by reference.

### Description of Related Art

In the case of performing flocculation treatment to remove turbidity and organic matter from various types of wastewater or service water, an inorganic flocculant such as iron chloride or polyaluminum chloride may be used in combination with a polymer flocculant. As a result, particles in a liquid to be treated flocculate, facilitating subsequent solid-liquid separation operations. Furthermore, the amount of sludge generated by suppressing the addition amount of an inorganic flocculant may be reduced.

In addition, in the case of dewatering sludge generated by biological treatment of wastewater, flocculation treatment using a combination of an inorganic flocculant and a polymer flocculant may be performed prior to the dewatering treatment. This allows for efficient charge neutralization of the sludge and improves floc strength, which is capable of significantly reducing the water content of the sludge (dewatered cake) after dewatering treatment.

A flocculant needs to be added in an appropriate amount according to the water quality of the liquid to be treated and the properties of the sludge to be treated. In flocculation treatment of wastewater and service water, if the addition amount (chemical dosage) of a flocculant is insufficient, the removal of turbidity and organic matter contained in the liquid to be treated becomes inadequate, resulting in deterioration of the water quality of the treated liquid. On the other hand, if the chemical dosage is excessive, the flocculant may leak to subsequent stages, potentially causing increased load in downstream treatment and contamination of downstream treatment equipment.

In addition, in sludge treatment, if the chemical dosage is insufficient, charge neutralization of the sludge becomes inadequate, and furthermore, the floc strength decreases, which may result in an increase in the water content of the dewatered cake or leakage of sludge into the dewatering separation liquid. Moreover, if the chemical dosage becomes excessive, the floc strength decreases, which may also cause an increase in the water content of the dewatered cake or leakage of sludge into the dewatering separation liquid.

To determine the optimal chemical dosage, it is fundamental to conduct bench-scale tests such as jar tests, flocculation tests, filtration tests, and compression tests (Nutsche tests). Additionally, in the conventional operation management of a dewatering machine, the factors to be manipulated and the amount of manipulation in the case of problems arising are determined based on an operator's determination from operational experience or the confirmation results of dewatering effects (such as filterability, floc strength, and water content of the dewatered cake) obtained through the aforementioned bench-scale tests.

However, determination based on the operator's experience is qualitative, and therefore may require more time than expected to achieve situation improvement, or may even worsen the dewatering effect due to incorrect operations. Furthermore, determination based on the bench-scale tests, although quantitative, is difficult to be evaluated continuously, and thus it takes time to reflect the results of the bench-scale tests in changes to operating conditions.

As a method to solve the above-mentioned problems, Patent Literature 1 describes controlling the addition of a flocculant using a flocculation state monitoring sensor that irradiates laser light towards the liquid to be treated and receives scattered light scattered by particles in the liquid to be treated to measure the flocculation state of the particles.

### Related Art

### Patent Literature

Patent Literature 1: Japanese Patent Application Laid-Open No. 2017-26438

### SUMMARY

### Technical Problem

According to the technology described in Patent Literature 1, it is stated that a flocculation index can be generated from the amplitude (change width) of the light reception signal intensity of scattered light obtained by a flocculation monitoring apparatus utilizing scattered light in the liquid to be treated, and the particle size distribution state of flocculated particles can be estimated. Furthermore, according to the technology described in Patent Literature 1, it is stated that the excess or deficiency of the addition amount of a flocculant may be evaluated, and the addition amount of the flocculant may be continuously adjusted. However, as a result of examination by the present inventors, it was found that when the particle size of particles in the liquid to be treated is smaller and larger than the diameter of the measurement region for measuring the particle size, the positive and negative correlation between the particle size and the index related to flocculation generated from the amplitude of the light reception signal intensity of scattered light is reversed. Due to the phenomenon, it may become unable to distinguish between particles with particle sizes smaller than the diameter of the measurement region and particles with particle sizes larger than the diameter of the measurement region.

The present invention has been made in view of the above circumstances, and an object thereof is to provide a method for determining a flocculation state and a method of flocculation treatment that are capable of more accurately determining a flocculation state of particles in a liquid to be treated.

### Solution to the Problem

The spirit of the present invention is as follows.
[1] A method for determining a flocculation state according to an aspect of the present invention is a method for irradiating a liquid containing particles with laser light and determining a flocculation state of particles based on a change width of received light intensity of scattered light resulting from scattering of the laser light due to the particles, and the method includes a correlation acquisition step of obtaining a correlation between a particle size of the particles and the change width of received light intensity, and a determination step of determining a flocculation state of the particles based on the correlation.
[2] In the method for determining the flocculation state described in [1], in the correlation acquisition step, a relationship between an addition amount of a flocculant and the change width of received light intensity may be obtained, and the correlation between the particle size and the change width of received light intensity may be obtained from the relationship.
[3] In the method for determining the flocculation state described in [1] or [2], the correlation between the particle size and the change width of received light intensity may be determined by a relationship between the particle size and a beam diameter of the laser light.
[4] In the method for determining the flocculation state described in [1], the correlation may show a positive correlation in the case where the particle size is equal to or smaller than the beam diameter, and may show a negative correlation in the case where the particle size is larger than the beam diameter.
[5] Furthermore, a method of flocculation treatment according to another aspect of the present invention is a method of flocculation treatment for adding a flocculant to a liquid containing particles to flocculate the particles, the method includes a determination process of irradiating the liquid with laser light and determining a flocculation state of the particles based on a change width of received light intensity of scattered light resulting from scattering of the laser light due to the particles, and a flocculant addition process of adding the flocculant in an addition amount based on the flocculation state of the particles determined in the determination process, and the determination process includes a correlation acquisition step of obtaining a correlation between a particle size of the particles and the change width of received light intensity, and a determination step of determining a flocculation state of the particles based on the correlation. Effects

According to the above-mentioned aspects of the present invention, the flocculation state of particles in the liquid to be treated can be determined more accurately.

### BRIEF DESCRIPTION OF THE DRAWINGS

FIG. 1 is a configuration diagram showing an example of the structure of a flocculation treatment apparatus to which a method for determining a flocculation state according to a first embodiment of the present invention is able to be applied.
FIG. 2 is a configuration diagram showing an example of the structure of a probe included in the flocculation state monitoring sensor.
FIG. 3 is a flowchart showing the process of the method for determining the flocculation state according to the first embodiment of the present invention.
FIG. 4 is a schematic diagram of the measurement region of the flocculation state monitoring sensor.
FIG. 5A is a diagram showing an example of a detection waveform by the flocculation state monitoring sensor.
FIG. 5B is a diagram showing an example of a detection waveform by the flocculation state monitoring sensor.
FIG. 6 is a diagram for describing the apparatus used to examine the relationship between a particle size and the change width of received light intensity.
FIG. 7 is a graph showing the relationship between the particle size and the large peak appearance rate.
FIG. 8 is a diagram for describing the considerations of the inventors of the present invention.
FIG. 9 is a diagram for describing the considerations of the inventors of the present invention.
FIG. 10 is a diagram showing an example of the cumulative frequency of the change width of received light intensity.
FIG. 11 is a diagram for describing the area of a detection waveform diagram showing the time-dependent change of received light intensity.
FIG. 12 is a graph diagram showing the correlation equation.
FIG. 13 is a graph showing an example of the change width of received light intensity and the cumulative occurrence frequency.
FIG. 14 is a flowchart showing the flow of the method of flocculation treatment according to a second embodiment of the present invention.
FIG. 15 is a flowchart showing the flow of a first flocculant addition process in the same embodiment.
FIG. 16 is a flowchart showing the flow of a second flocculant addition process in the same embodiment.

### DESCRIPTION OF EMBODIMENTS

### <<Example of configuration of flocculation treatment apparatus>>

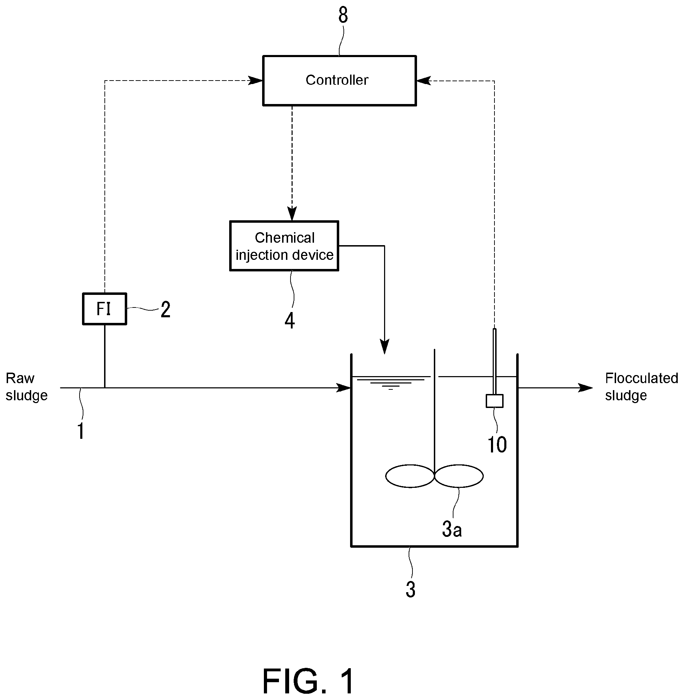

First, an example of a flocculation treatment apparatus to which a method for determining a flocculation state according to an embodiment of the present invention is able to be applied will be described. FIG. 1 is a configuration diagram showing an example of a flocculation treatment apparatus to which a method for determining a flocculation state according to the embodiment is able to be applied.

As shown in FIG. 1, in the flocculation treatment apparatus, a liquid to be treated is introduced into a treatment tank 3 through an inlet pipe 1 having a flow meter 2, and a flocculant is added to the treatment tank 3 by a chemical injection device 4. The treatment tank 3 is provided with a mixer 3a and a flocculation state monitoring sensor 10, and a detection signal generated by the flocculation state monitoring sensor 10 is input to a controller 8. The controller 8 controls the chemical injection device 4 based on the detection signal.

The flocculant may be an inorganic flocculant, an organic flocculant, or a combination of both.

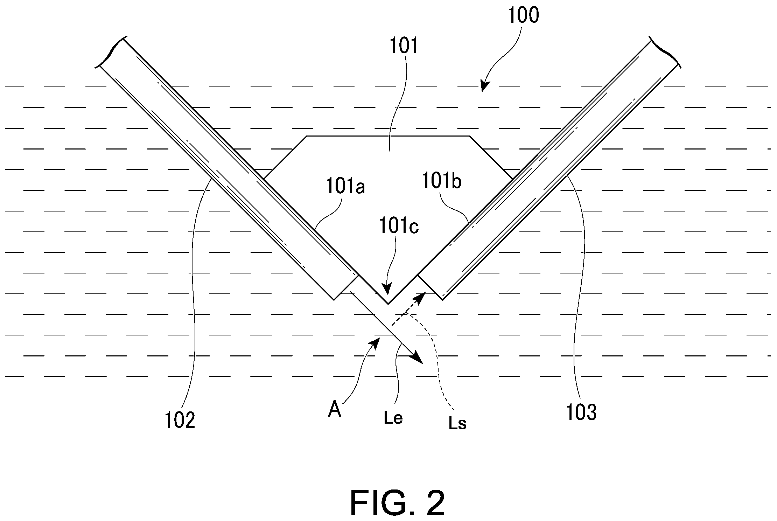

Preferably, the flocculation state monitoring sensor 10 uses the one described in Patent Literature 1. The flocculation state monitoring sensor 10 includes a probe 100. FIG. 2 shows the configuration of the probe 100 included in the flocculation state monitoring sensor 10. The probe 100 includes a block 101 having faces 101a and 101b perpendicular to each other and a top part 101c where the faces 101a and 101b intersect, a light-emitting part 102 which is provided along the face 101a and irradiates laser light towards the liquid to be treated, and a light-receiving part 103 which is provided along the face 101b with a light-receiving optical axis perpendicular to a light-emitting optical axis of the light-emitting part 102. In addition, the flocculation state monitoring sensor 10 includes a light-emitting circuit, a detection circuit, and a measurement circuit (not shown) to perform light-emitting operation of the light-emitting part 102 and analysis of the light reception signal of the light-receiving part 103. The measurement circuit includes a timing circuit, an A/D conversion part, a calculation part, and the like.

Similar to Patent Literature 1, in the probe 100, laser light irradiated from the light-emitting part 102 to a measurement region A near the top part 101c is scattered by particles within the measurement region A. The scattered light is received by the light-receiving part 103, and the flocculation state is measured based on the time-dependent change in the intensity of the scattered light received by the light-receiving part 103. The block 101 is made of an opaque material. The diameter of the measurement region A in a cross-section perpendicular to the optical axis of laser light L, in other words, the diameter of the laser light L, is, for example, 1 mm. As described later, the diameter of the measurement region A is a threshold at which the correlation between the particle sizes and the change width of received light intensity, which is the intensity of scattered light received by the light-receiving part 103, is reversed. Therefore, to appropriately determine the required flocculation state, the diameter of the measurement region A may be changed as appropriate.

In response to a signal from the timing circuit, the light-emitting circuit transmits an electrical signal with a constant modulation frequency to the light-emitting part 102. The light-emitting part 102 emits laser light according to the signal from the light-emitting circuit. The light-receiving part 103 receives scattered light generated when the laser light hits particles contained in the water to be treated, and converts the scattered light into an electrical signal. The detection circuit removes the modulation component included in the electrical signal from the light-receiving part 103 and outputs a light reception voltage corresponding to the received light intensity.

The measurement circuit transmits a signal (specific frequency modulated wave) for light emission to the light-emitting circuit, and also converts the signal from the detection circuit into a digital signal, performs a logical operation, and outputs information related to flocculation.

As the flocculation state monitoring sensor 10, the monitoring apparatus described in Patent Literature 1, especially the monitoring apparatus described in Japanese Patent No. 6281534, which was patented, can be preferably used, but the present invention is not limited thereto.

The flocculation monitoring apparatus of Japanese Patent No. 6281534 includes:
"a flocculation monitoring apparatus for monitoring a treatment state of a liquid to be treated that is subject to flocculation treatment, including:
a measurement light irradiation part which irradiates measurement light to a measurement region of the liquid to be treated;
a scattered light receiving part which receives scattered light from particles in the liquid to be treated in the measurement region; and
a measurement value calculation part which includes an amplitude measurement means for measuring an amplitude of a light reception signal obtained at the scattered light receiving part, monitors and tallies the occurrence of the measured amplitude, calculates the occurrence rate or occurrence frequency of a specific amplitude, and calculates an index related to the flocculation of the liquid to be treated representing the particle sizes of flocs in the liquid to be treated, and
the amplitude measurement means detecting a first inflection point at which the light reception signal changes from rising to falling and a second inflection point at which the light reception signal changes from falling to rising, and measuring the amplitude from the level difference between the first inflection point and the second inflection point, which is a characteristic feature of the flocculation monitoring apparatus."

Up to this point, an example of the flocculation treatment apparatus to which the method for determining the flocculation state according to the embodiment may be applied has been described.

### <<Method for Determining Flocculation State>>

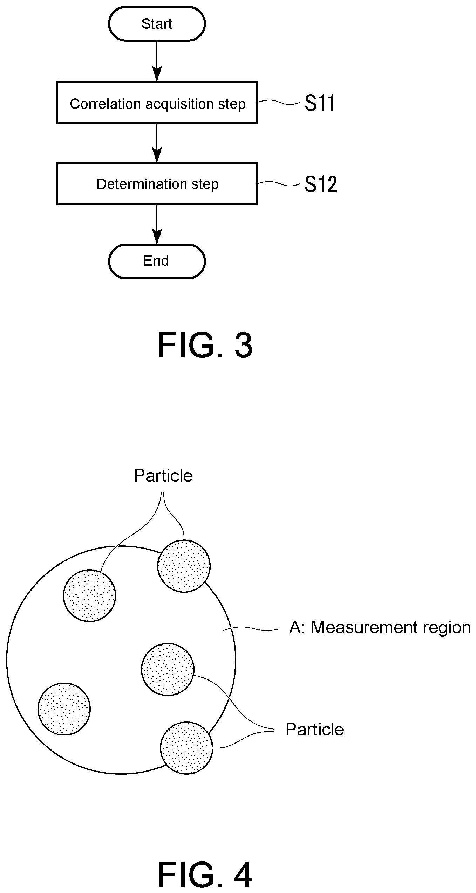

Next, the method for determining the flocculation state according to a first embodiment of the present invention will be described. The method for determining the flocculation state according to the embodiment is a method for irradiating a liquid containing particles with laser light and determining a flocculation state of the particles based on received light intensity of scattered light resulting from scattering of the laser light due to the particles. As shown in FIG. 3, the method includes a correlation acquisition step (Step S11) for obtaining a correlation between a particle size of particles and a change width of received light intensity, and a determination step (Step S12) for determining a flocculation state of the particles based on the correlation.

The method for determining the flocculation state according to the embodiment is a method for irradiating a liquid containing particles with laser light and determining a flocculation state of the particles based on received light intensity of scattered light resulting from scattering of the laser light due to the particles. A known method can be adopted for laser light irradiation, reception of scattered light, and calculation of received light intensity. For example, the flocculation state monitoring sensor 10 provided in the aforementioned flocculation treatment apparatus may be used. In the following, the method for determining the flocculation state will be described using the case where the flocculation state monitoring sensor 10 is used as an example.

### <Correlation Acquisition Step (Step S11)>

In the correlation acquisition step, a correlation between a particle size and a change width of received light intensity is obtained. As shown in FIG. 4, at a certain point in time, for example, 5 particles exist in the measurement region A. As shown in FIG. 2, at the point, laser light Lₑ irradiated into the measurement region A is scattered by each of the particles, and scattered light Lₛ enters the light-receiving part 103. After a predetermined time Δt has elapsed from the point, the number of particles existing in the measurement region A fluctuates. Theoretically, the number of particles may not change, but since the particles undergo Brownian motion and the liquid to be treated in the treatment tank 3 is being mixed, the number of particles usually fluctuates. The predetermined time Δt is preferably a time selected from between 0.1 to 10 mSec, for example, about 1 mSec.

As the number of particles fluctuates, the scattered light intensity fluctuates accordingly, and the received light intensity of the scattered light by the light-receiving part 103 fluctuates.

In the case where the particle size is equal to or smaller than the diameter of measurement region A, the larger the particle size, the greater the change width of received light intensity when a single particle enters or exits the measurement region A. Therefore, from the change width of received light intensity, the relative size of the particle size of the particle entering or exiting the measurement region A can be detected. In other words, the difference between the received light intensity at an arbitrary time tₖ and the received light intensity at a time tₖ₊₁ after Δt has elapsed is proportional to the surface area of the particles that have entered or exited the measurement region A during the Δt.

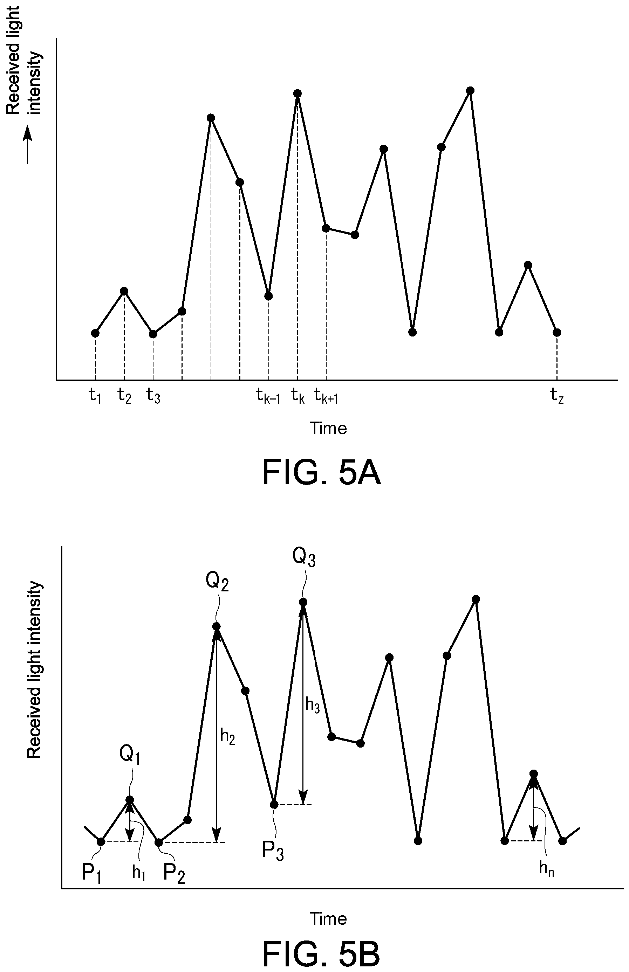

FIG. 5A shows an example of the time-dependent change of received light intensity. The output signal in FIG. 5A is the received light intensity of the light-receiving part 103, and the unit is, for example, mV.

FIG. 5A is a graph plotting the received light intensity measured at each time t₁, t₂...t_{z}, and the interval Δt between each time (i.e., tₖ-tₖ₋₁) is, as mentioned above, preferably 0.1 to 10 mSec, for example, 1 mSec.

FIG. 5B is a descriptive diagram of FIG. 5A in which minimum points P₁, P₂... and maximum points Q₁, Q₂... are plotted, and the change width of received light intensity, that is, differences h₁, h₂... between the minimum points and the maximum points, are indicated. Hereafter, the number of the maximum points may be referred to as the number of peaks.

As mentioned above, the difference hₖ between the received light intensity at an arbitrary time tₖ₋₁ and the received light intensity at the time tₖ is a value proportional to the surface area of particles that have entered or exited the measurement region A between the time tₖ₋₁ and the time tₖ.

From all change width of received light intensity h₁, h₂...hₙ during the Δt×z seconds from the time t₁ to the time t_{z}, the particle size distribution of particles existing near the measurement region A between the time t₁ to the time t_{z} is detected. For example, z may be set to 200, and in the case where Δt = 1 mSec, Δtxz becomes 0.2 seconds. However, this is merely an example, and Δtxz may be approximately 0.01 to 900 seconds.

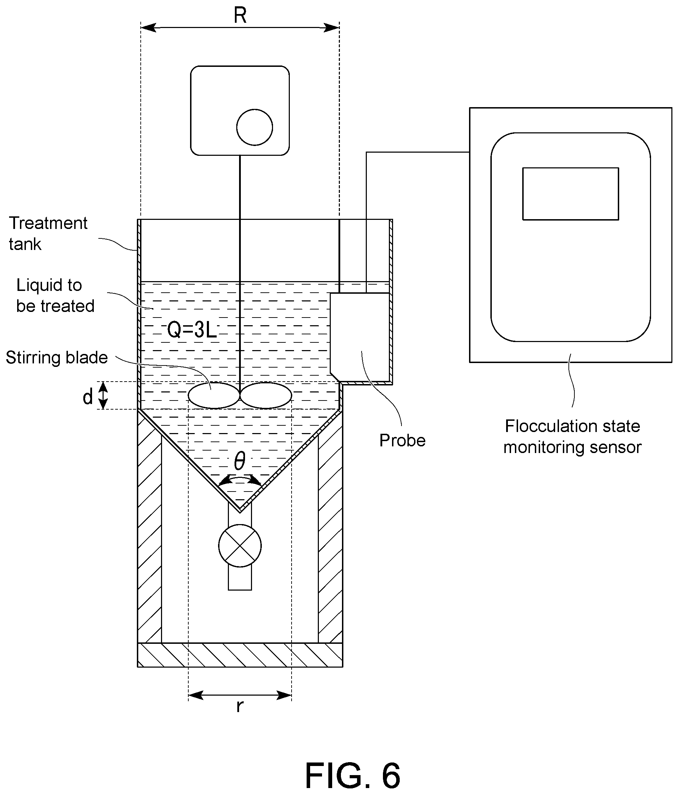

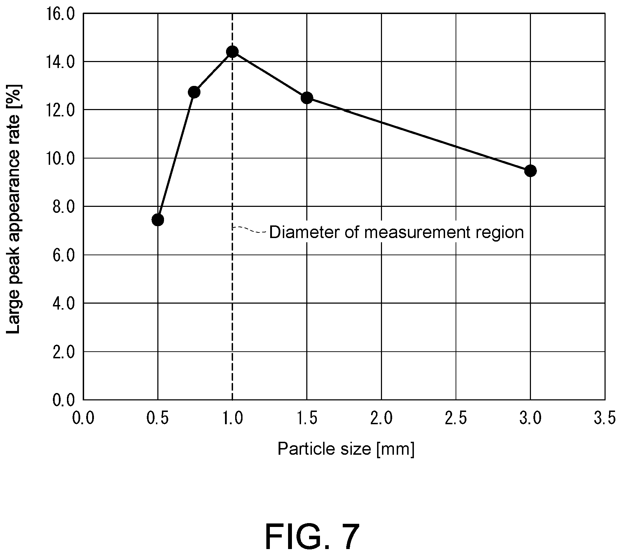

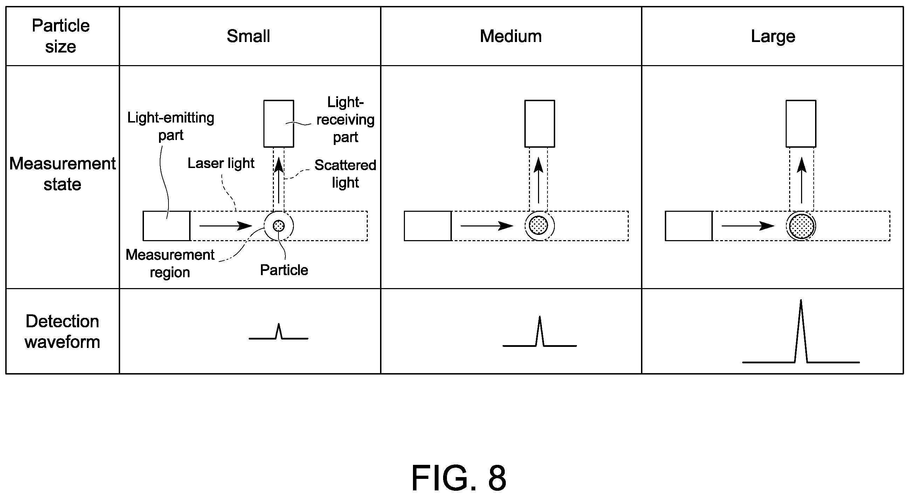

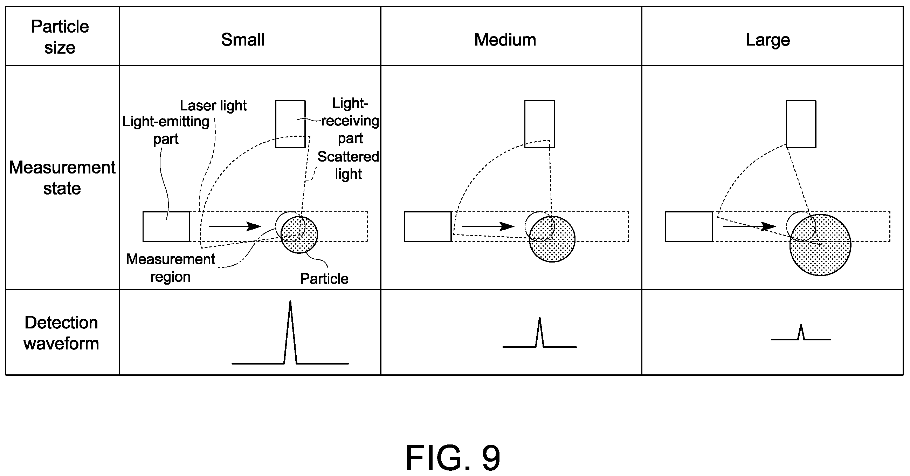

Here, referring to FIGS. 6 to 9, the relationship between the particle size and the change width of received light intensity is described. The inventors of the present invention conducted a study on the relationship between the particle size and the change width of received light intensity. FIG. 6 is a diagram for describing the apparatus used in the study of the relationship between the particle size and the change width of received light intensity, and FIG. 7 is a graph showing the relationship between the particle size and a large peak appearance rate obtained from the study of the relationship between the particle size and the change width of received light intensity. The large peak appearance rate refers to the appearance rate of peaks with a change width of received light intensity of 4000 mV or more relative to the total number of peaks. FIGS. 8 and 9 are diagrams for describing the considerations of the inventors of the present invention.

A liquid to be treated was prepared by adding black artificial particles to water to achieve a concentration of 1.0 weight% in dry weight. The artificial particles were manufactured by gelling a sodium alginate aqueous solution containing 1 mass% of paint in a 1 mass% calcium chloride aqueous solution through a tube with a syringe provided at the tip. The addition rate of the sodium alginate aqueous solution was adjusted using a Smooth Flow Pump manufactured by Tacmina Corporation. Artificial particles of 0.5 to 3.0 µm were manufactured by changing the concentration of the sodium alginate aqueous solution, the addition rate, and the syringe shape.

As shown in FIG. 6, a treatment tank with an inner diameter R of 154 mm and a taper at the bottom with an angle θ = 90° when viewed from the front was used. For stirring the liquid to be treated, a pitched paddle type stirring blade with four blade plates inclined at 45° from the horizontal plane was used. A diameter r of the stirring blade (the distance r between the tips of the blade plates passing through the center of rotation) was 75 mm, and the distance between the upper end and the lower end of each of the blade plates was 10 mm. The stirring blade was disposed at the center of the treatment tank, with a distance d from the upper end of the taper to the upper end of each of the blade plates being 45 mm.

A flocculation state monitoring sensor (S. sensing CS-P manufactured by Kurita Water Industries Ltd.) was disposed above the stirring blade, and 3 L of the liquid to be treated was supplied to the treatment tank. The diameter of the measurement region of the probe in the flocculation state monitoring sensor is 1 mm. Then, with a stirring speed of 300 rpm and an analysis time of 3 minutes, the received light intensity was measured, and the large peak appearance rate for each of the particle sizes of the artificial particles was calculated. The duty ratio of the laser light to be irradiated was set to 10% (light emission time 200 mSec, pause time 1800 mSec). The results are shown in FIG. 7.

As shown in FIG. 7, it was found that in the case where the particle size is smaller than the diameter of the measurement region, the large peak appearance rate increases with the increase in the particle size, and in the case where the particle size is larger than the diameter of the measurement region, the large peak appearance rate decreases with the increase in the particle size.

The inventors of the present invention have considered the above examination results as follows. As shown in FIG. 8, in the case where the particle size passing through the measurement region A is smaller than the diameter of the measurement region A, as the particle size increases, the projected area of the laser light becomes larger, resulting in a larger change in the amount of the scattered light. As a result, the change in the amount of light received by the light-receiving part 103, which is the amount of scattered light received, also increases. In other words, there is a positive correlation between the particle size and the change width of received light intensity. On the other hand, as shown in FIG. 9, in the case where the particle size passing through the measurement region A is larger than the diameter of the measurement area, as the particle size increases, the curvature of the particle surface decreases, resulting in a smaller scattering angle of the scattered light, and the scattered light reaching the light-receiving part 103 decreases, resulting in a smaller change in the amount of the scattered light. As a result, the change in the amount of light received becomes smaller. In other words, there is a negative correlation between the particle size and the change width of received light intensity. Therefore, the correlation between the particle size passing through the measurement region A and the change width of received light intensity reverses at the boundary of the diameter of the measurement region. Also, as mentioned above, the correlation between the particle size and the change width of received light intensity can be determined by the relationship between the particle size and the beam diameter of the laser light. And the correlation shows a positive correlation in the case where the particle size is equal to or smaller than the beam diameter, and shows a negative correlation in the case where the particle size is larger than the aforementioned beam diameter.

In detail, in the case where the particle size is equal to or smaller than the diameter of the measurement region A, as shown in FIG. 5B, the change width of received light intensity h₁ indicates that a small-diameter particle has been detected, the change width of received light intensity h₂ indicates that a large-diameter particle has been detected, and the change width of received light intensity h₃ indicates that a particle with a diameter therebetween has been detected. The change width of received light intensity hₙ indicates that a particle slightly larger than the particle of h₁ has been detected.

On the other hand, in the case where the particle size is larger than the diameter of the measurement region A, it becomes the opposite of the case where the particle size is equal to or smaller than the diameter of the measurement region A. Specifically, in FIG. 5B, the change width of received light intensity h₁ indicates that a large-diameter particle has been detected, the change width of received light intensity h₂ indicates that a small-diameter particle has been detected, and the change width of received light intensity h₃ indicates that a particle with a diameter therebetween has been detected. The change width of received light intensity hₙ indicates that a particle slightly smaller than the particle of h₁ has been detected.

Generally, up to a certain chemical dosage, as the chemical dosage of the flocculant increases, flocculation progresses and the particle size becomes larger. Therefore, in the correlation acquisition step, the addition amount (chemical dosage) of the flocculant added to the liquid to be treated is increased, and the change in received light intensity is obtained. In the case where the change width of received light intensity increases with the increase in chemical dosage, it is determined that the particle size is equal to or smaller than the diameter of the measurement region A, and it is determined that there is a positive correlation between the particle size in the liquid to be treated and the change width of received light intensity. On the other hand, in the case where the change width of received light intensity decreases with the increase in chemical dosage, it is determined that the particle size is larger than the diameter of the measurement region A, and it is determined that there is a negative correlation between the particle size in the liquid to be treated and the change width of received light intensity. As described above, if the relationship between the chemical dosage and the received light intensity is obtained, the correlation between the particle size and the change width of received light intensity can be obtained from the relationship.

### <Determination Step (Step S12)>

In the determination step, the flocculation state of particles is determined based on the correlation between the particle size and the change width of received light intensity.

In the case where there is a positive correlation between the particle size of particles in the liquid to be treated and the change width of received light intensity, the change width of received light intensity of the flocculation state monitoring sensor in the measurement time range t₁∼t_{z} is classified into classes in order from small to large, and by counting the number of peaks belonging to each of the classes, the relative frequency, that is, the frequency (number of peaks) of each of the classes in the total number of peaks is obtained, and also the cumulative relative frequency of the number of peaks is obtained. At this time, as shown in Table 1, the larger the change width of received light intensity, the larger the particle size. On the other hand, in the case where there is a negative correlation between the particle size in the liquid to be treated and the change width of received light intensity, the change width of received light intensity of the flocculation state monitoring sensor in the measurement time range t₁∼t_{z} is classified into classes in order from large to small, and by counting the number of peaks belonging to each of the classes, the relative frequency, that is, the frequency (number of peaks) of each of the classes in the total number of peaks is obtained, and also the cumulative relative frequency of the number of peaks is obtained. At this time, the smaller the change width of received light intensity, the larger the particle size. The number of classes is preferably 2 or more, particularly 3 or more, for example, 10 to 100.

**[Table 1]**

| Particle size | Flocculation index | Particle size determination | |
|---|---|---|---|
| | Change width of received light intensity | Particle size≦Diameter of measurement region | Particle size≧Diameter of measurement region |
| Small | Small | Small | - |
| ↑ | Medium | Medium | - |
| Diameter of measurement region | Large | Large | Small |
| ↓ | Medium | - | Medium |
| Large | Small | - | Large |

As described above, the flocculation state of particles can be determined based on the correlation between the particle size and the change width of received light intensity. In the following, examples of more detailed methods for determining the flocculation state are described.

(In the case where there is a positive correlation between the particle size in the liquid to be treated and the change width of received light intensity)

### [Determination of flocculation state based on the occurrence frequency of the number of peaks equal to or above a predetermined change width of received light intensity and the average received light intensity]

The determination of the flocculation state can be performed, for example, by the following method. In the case where there is a positive correlation between the particle size in the liquid to be treated and the change width of received light intensity, for example, if the occurrence frequency (i.e., relative frequency) of the number of peaks equal to or above a predetermined change width of received light intensity is above a preset threshold (e.g., 20% or more, which is equivalent to 80% or less when converted to a cumulative relative frequency), the flocculation state is determined to be good. Specific examples are described below.

### Process 1

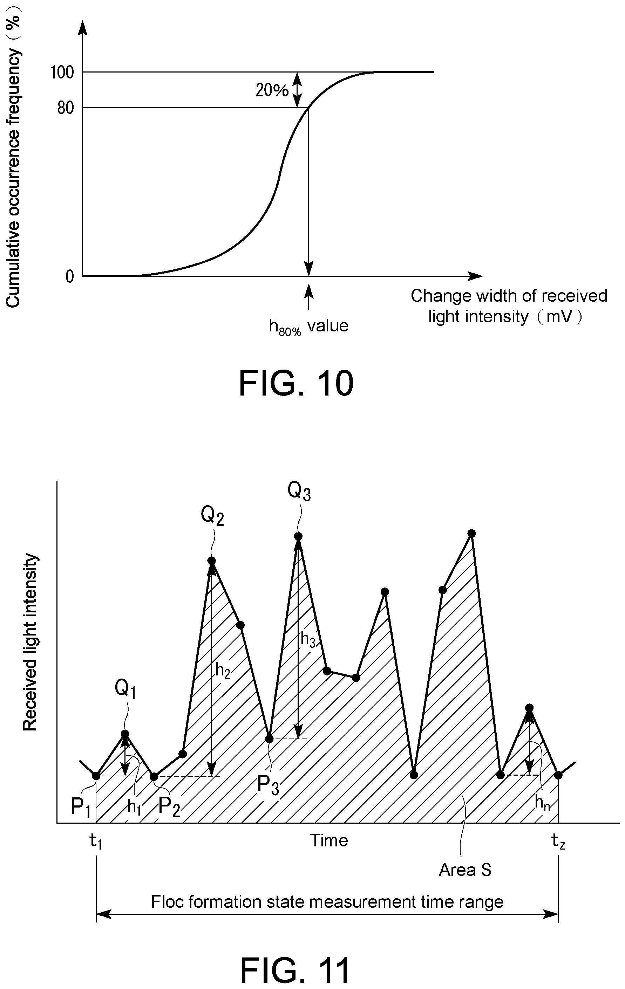

On a day when the flocculation condition is determined to be good by visual inspection or other means, determine the change width of received light intensity h_{80%} (refer to FIG. 10) at which the cumulative relative frequency of the number of peaks becomes the 80th percentile value, and the average received light intensity. The average received light intensity is the value obtained by dividing an area S (time integral value of received light intensity) of the hatched region in FIG. 11 by the measurement time (t_{z}-t₁).

Perform Process 1 on multiple days when the flocculation condition is good, and determine the change width of received light intensity h_{80%} value and the average received light intensity for each day.

### Process 2

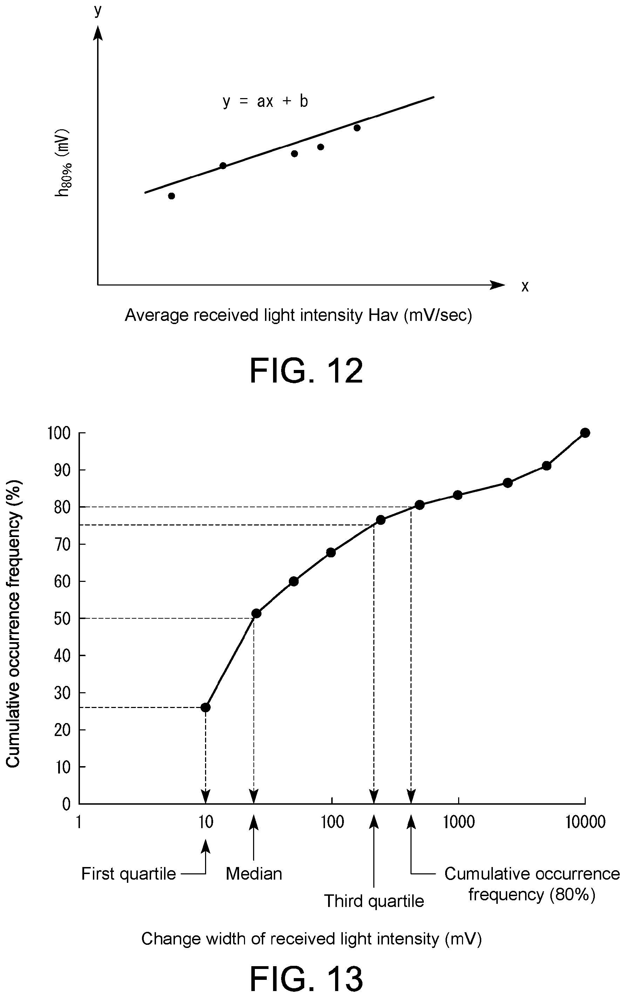

By plotting the change width of received light intensity h_{80%} value and the average received light intensity for each day from Process 1 on a graph, obtain a correlation diagram of the change width of received light intensity h_{80%} value and the average received light intensity, as shown in FIG. 12. Then, determine the relationship equation (y=ax+b) between the average received light intensity and the 80th percentile value (h_{80%} value) of the cumulative occurrence frequency.

### Process 3

In the relationship equation y=ax+b determined as described above, substitute the measured value of the average received light intensity at the time of chemical dosage control for x, calculate y, which is the h_{80%}. value, and set the calculated h_{80%} value as the "target change width of received light intensity". Then, if the occurrence frequency of the number of peaks equal to or above the "target change width of received light" is 20% or more (80% or less in terms of the cumulative occurrence frequency), it is determined that the flocculation state is good.

In the above description, the predetermined threshold was set to 20% and the cumulative occurrence frequency to 80%, but the values can be changed. For example, the cumulative occurrence frequency can be set to 70% or 50% for the threshold of 20%, and the values can be appropriately set within the range where correlation can be obtained. However, it is preferable that the threshold X% and the cumulative occurrence frequency Y% are values where X+Y is close to 100.

In addition, in FIG. 12, the relationship equation is expressed as a linear equation, but it can be a quadratic equation or any other equation as long as there is a correlation. Moreover, it is acceptable to create a graph and derive the relationship from the graph.

In the above description, information of the change width of received light intensity (the change width of received light intensity or a corresponding value) was defined as the change width of received light intensity when the cumulative occurrence frequency is a predetermined value. However, the information is not limited to the definition and can be, for example, the average value, median, first quartile, or third quartile of the change width of received light intensity. In the case where the average value or median of the change width of received light intensity is used as the "information of the change width of received light intensity", it is sufficient to set the target average width of received light intensity based on the correlation equation between the information and the average received light intensity.

In addition, FIG. 13 shows an example of the relationship between the median, first quartile, third quartile of the change width of received light intensity and the cumulative occurrence frequency.

In the above description, the average received light intensity was used as the received light intensity information (light reception signal intensity or a corresponding value). However, the received light intensity information is not limited to the average received light intensity, and can be the first quartile, median, third quartile, maximum value, or any other percentile value.

In the case where the peak wave height value (change width of received light intensity) and the received light intensity are correlated, the value corrected by the relationship equation between the peak wave height value and the light reception signal intensity becomes constant regardless of the color or concentration of the sample to be measured.

### [Another aspect of determining the flocculation state]

In another aspect of determining the flocculation state, the flocculation state may be determined based on [average change width of received light intensity]/[average received light intensity] calculated from the received light intensity of the flocculation state monitoring sensor. In this case, a first threshold of [average change width of received light intensity]/[average received light intensity] is set to ensure that the particle size is not too small, and a second threshold of [average change width of received light intensity]/[average received light intensity] is set to ensure that the particle size is not too large.

To obtain a graph showing the relationship between [average change width of received light intensity] and [average received light intensity], and to determine the first and second thresholds, for example, a flocculation treatment apparatus is installed on-site and operated by a worker to perform flocculation treatment on actual wastewater at the site for a predetermined period (e.g., about 1 week to 1 month). In this case, the worker controls the chemical dosage based on experience while observing the flocculation state, and records the time-dependent change of the signal intensity from the flocculation state monitoring sensor during this period. Then, during the period, [average change width of received light intensity]/[average received light intensity] when the flocculation state (particle size) reaches the lower limit of the appropriate range is determined as the first threshold. Also, during the period, [average change width of received light intensity]/[average received light intensity] when the flocculation state (floc diameter) reaches the upper limit of the appropriate range is determined as the second threshold.

By determining the flocculation state based on [average change width of received light intensity]/[average received light intensity], the flocculation state may be appropriately determined based on the light reception signal intensity of the flocculation state monitoring sensor, even in cases where the color and concentration of the particles are different.

(In the case where there is a negative correlation between the particle size in the liquid to be treated and the change width of received light intensity)

In the case where there is a negative correlation between the particle size in the liquid to be treated and the change width of received light intensity, for example, if the occurrence frequency (i.e., relative frequency) of the number of peaks equal to above a predetermined change width of received light intensity is equal to or below a preset threshold, the flocculation state is determined to be good.

In addition, even in the case where there is a negative correlation between the particle size in the liquid to be treated and the change width of received light intensity, the flocculation state may be determined based on [average change width of received light intensity]/[average received light intensity].

### <<Method of Flocculation Treatment>>

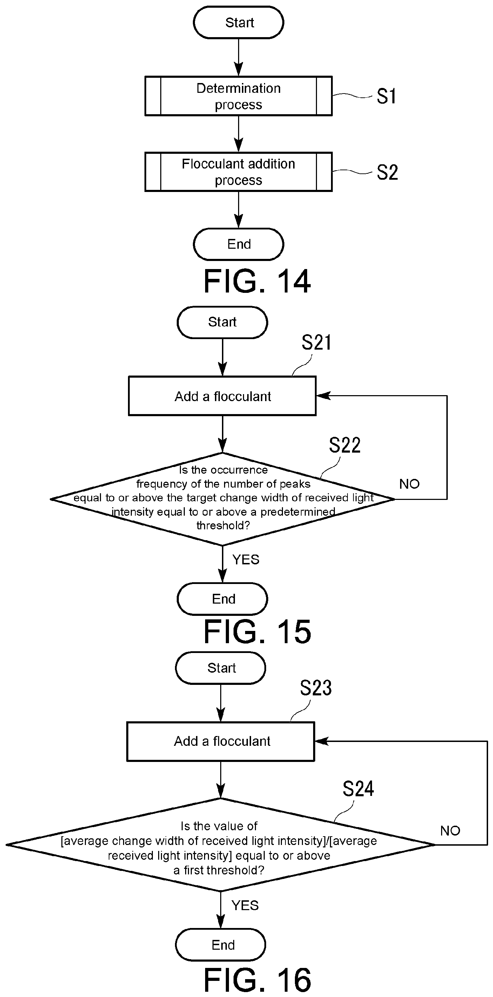

Next, referring to FIG. 14, a method of flocculation treatment according to a second embodiment of the present invention will be described. FIG. 14 is a flowchart showing the flow of the method of flocculation treatment according to the embodiment. The method of flocculation treatment according to the embodiment is a method of flocculation treatment for adding a flocculant to a liquid containing particles to flocculate the particles, and includes a determination process (Step S1) of irradiating the liquid containing particles with laser light and determining a flocculation state of the particles based on a change width of received light intensity of scattered light resulting from scattering of the laser light due to the particles, and a flocculant addition process (Step S2) of adding the flocculant in an addition amount based on the flocculation state of the particles determined in the determination process. The determination process includes a correlation acquisition step (Step S11) of obtaining a correlation between a particle size of the particles and the change width of received light intensity, and a determination step (Step S12) of determining a flocculation state of the particles based on the correlation. In the determination process of the method of flocculation treatment according to the embodiment, determination is made according to the method for determining the flocculation state according to the first embodiment. Therefore, the description of the determination process is omitted here, and examples of the flocculant addition process will be described in detail with reference to FIGS. 15 and 16. FIG. 15 is a flowchart showing the flow of a first flocculant addition process in the embodiment. FIG. 16 is a flowchart showing the flow of a second flocculant addition process in the embodiment.

### <Flocculant addition process (Step S2)>

### (First flocculant addition process)

The first flocculant addition process is a flocculant addition process in the case where the determination of the flocculation state is made based on the occurrence frequency of the number of peaks equal to above a predetermined change width of received light intensity and the average received light intensity in the determination process. In the first flocculant addition process, the flocculant is added until the occurrence frequency of the number of peaks equal to or above a predetermined change width of received light intensity becomes equal to or above the threshold. For example, the h_{80%} value calculated from x in the aforementioned relationship equation y=ax+b is set as the "target change width of received light", and the addition amount of the flocculant is controlled so that the occurrence frequency of the number of peaks equal to or above the "target change width of received light" becomes 20% or more (80% or less in terms of the cumulative occurrence frequency).

In detail, first, as shown in FIG. 15, the flocculant is added to the treatment tank where the liquid to be treated is being mixed (Step S21). The flocculant may be added continuously in small amounts, or the needed amount of additive may be added in one or several portions. Next, it is determined whether the occurrence frequency of the number of peaks equal to or above the target change width of received light intensity is equal to or above a predetermined threshold. The above-mentioned determination is performed, for example, by the controller 8. In the case where the occurrence frequency of the number of peaks equal to or above the target change width of received light intensity is equal to or above the predetermined threshold (Step S22/YES), the mixing is stopped, the treatment liquid is discharged from the treatment tank, and the flocculation treatment process is completed. On the other hand, in the case where the occurrence frequency of the number of peaks equal to or above the target change width of received light intensity is below the predetermined threshold (Step S22/NO), the addition of the flocculant is continued, and when there is a shortage of the flocculant, the output (pump stroke, pump pulse, rotation speed, etc.) of the chemical injection device is increased, and when there is an excess of the flocculant, the output of the chemical injection device is decreased.

As a result, the addition amount of the flocculant can be controlled so that the particle size becomes within an appropriate range.

### (Second flocculant addition process)

The second flocculant addition process is a flocculant addition process in the case where the flocculation state is determined based on [average change width of received light intensity]/[average received light intensity]. In the second flocculant addition process, the flocculant is added so that [average change width of received light intensity]/[average received light intensity] becomes larger than the first threshold, and to prevent the flocculated particles from becoming excessively large, the flocculant is added so that [change width of received light intensity]/[average received light intensity] becomes equal to or below the second threshold (which is larger than the first threshold).

In detail, first, as shown in FIG. 16, the flocculant is added to the treatment tank where the liquid to be treated is being mixed (Step S23). It is preferable to add the flocculant continuously in small amounts. Next, it is determined whether the value of [average change width of received light intensity]/[average received light intensity] is equal to or above the first threshold (Step S24). The above-mentioned determination is performed, for example, by the controller 8. In the case where the value of [average change width of received light intensity]/[average received light intensity] is equal to or above the first threshold (Step S24/YES), the mixing is stopped, the treatment liquid is discharged from the treatment tank, and the flocculation treatment process is completed. On the other hand, in the case where the value of [average change width of received light intensity]/[average received light intensity] is below the first threshold (Step S24/NO), the addition of the flocculant is continued, and when there is a shortage of the flocculant, the output (pump stroke, pump pulse, rotation speed, etc.) of the chemical injection device is increased, and when there is an excess of the flocculant, the output of the chemical injection device is decreased. It should be noted that in the case where the value of [average change width of received light intensity]/[average received light intensity] exceeds the second threshold, the particle size is excessively large, so in this case as well, the flocculant addition process is completed.

By controlling the addition of the flocculant based on [average change width of received light intensity]/[average received light intensity], even in cases where the color and concentration of particles differ, the addition of the flocculant can be appropriately controlled based on the light reception signal intensity of the flocculation state monitoring sensor (in other words, based on particle size measurements corrected in consideration of the color and concentration of particles).

(In the case where there is a negative correlation between the particle size in the liquid to be treated and the change width of received light intensity)

In the case where there is a negative correlation between the particle size in the liquid to be treated and the change width of received light intensity, for example, if the occurrence frequency (i.e., relative frequency) of the number of peaks equal to or above a predetermined change width of received light intensity is equal to or below a preset threshold, the flocculation state is determined to be good. Then, the addition amount of the flocculant should be controlled so that the occurrence frequency of the number of peaks equal to or above the predetermined change width of received light intensity becomes equal to or below the threshold.

In addition, even in the case where there is a negative correlation between the particle size in the liquid to be treated and the change width of received light intensity, the addition amount of the flocculant may be controlled by [average change width of received light intensity]/[average received light intensity].

The present invention has been described based on the embodiments of the present invention, but the present invention is not limited thereto. The above are merely examples, and anything that has a structure substantially identical to the technical idea described in the scope of claims of the present invention and exhibits similar effects is included in the technical scope of the present invention.

For example, the flocculation treatment apparatus described above is merely an example. In FIG. 1, the controller 8 and the flocculation state monitoring sensor 10 are disposed separately, but the control program of the controller 8 may be incorporated into the signal processing part of the flocculation state monitoring sensor 10, and the control signal may be given from the flocculation state monitoring sensor 10 to the chemical injection device 4.

In addition, the flocculation state monitoring sensor 10 may be disposed on the flocculated liquid outflow pipe from the treatment tank 3. Furthermore, a measurement tank into which the liquid from the treatment tank 3 is introduced may be provided, and the flocculation state monitoring sensor 10 may be disposed in the measurement tank.

In addition, in the probe described above, the light-emitting part 102 and the light-receiving part 103 are perpendicular to each other, but the arrangement is not limited thereto. The light-emitting part 102 and the light-receiving part 103 may be disposed to form other angles. The angle formed between the light-emitting part 102 and the light-receiving part 103 can be, for example, from 10° to 170°.

In addition, the usage time of the light-emitting element can be extended by repeating light emission and non-emission at predetermined time intervals. For example, if the light emission time is set to 0.2 seconds per cycle and the interval between emission is set to 2 seconds, the usage time (lifespan) of the light-emitting element may be extended to 10 times longer compared to continuous light emission.

In addition, the example of the flocculant addition process described above is merely an example, and the flocculant may be added based on the flocculation state determined by the method for determining the flocculation state according to the present invention.

### Reference Signs List

3: Treatment tank
4: Chemical injection device
8: Controller
10: Flocculation state monitoring sensor

## Claims

1. A method for determining a flocculation state is a method for irradiating a liquid containing particles with laser light and determining a flocculation state of the particles based on a change width of received light intensity of scattered light resulting from scattering of the laser light due to the particles, comprising:
a correlation acquisition step of obtaining a correlation between a particle size of the particles and the change width of received light intensity; and
a determination step of determining a flocculation state of the particles based on the correlation.

2. The method for determining the flocculation state according to claim 1, wherein in the correlation acquisition step, a relationship between an addition amount of a flocculant and the change width of received light intensity is obtained, and from the relationship, the correlation between the particle size and the change width of received light intensity is obtained.

3. The method for determining the flocculation state according to claim 1 or 2, wherein the correlation between the particle size and the change width of received light intensity is determined by a relationship between the particle size and a beam diameter of the laser light.

4. The method for determining the flocculation state according to claim 3, wherein the correlation shows a positive correlation when the particle size is equal to or smaller than the beam diameter, and shows a negative correlation when the particle size is larger than the beam diameter.

5. A method of flocculation treatment for adding a flocculant to a liquid containing particles to flocculate the particles, comprising:
a determination process of irradiating the liquid with laser light and determining a flocculation state of the particles based on a change width of received light intensity of scattered light resulting from scattering of the laser light due to the particles; and
a flocculant addition process of adding the flocculant in an addition amount based on the flocculation state of the particles determined in the determination process, and
the determination process comprising a correlation acquisition step of obtaining a correlation between a particle size of the particles and the change width of received light intensity, and a determination step of determining a flocculation state of the particles based on the correlation.
